# FASCICULE DE BREVET EUROPEEN

(11) **EP 3 595 109 B1**
(45) Date de publication et mention de la délivrance du brevet: **11.11.2026**
(21) Numéro de dépôt: 19184073.5
(22) Date de dépôt: 03.07.2019
(51) Int. Cl.: H02G 11/02, H02G 3/30, G02B 6/44

(54) **SUPPORT DE SURLONGUEURS DE FAISCEAUX DANS UN HARNAIS ELECTRIQUE ET OU OPTIQUE, VEHICULE COMPORTANT UN TEL SUPPORT ET PROCEDE D'INSTALLATION DE FAISCEAUX EN METTANT EN OEUVRE UN TEL SUPPORT**
HALTERUNG FÜR ÜBERLÄNGEN VON BÜNDELN IN EINEM ELEKTRISCHEN UND/ODER OPTISCHEN KABELBAUM, FAHRZEUG, DAS EINE SOLCHE HALTERUNG UMFASST, UND VERFAHREN ZUM EINBAU VON KABELBÜNDELN UNTER VERWENDUNG EINER SOLCHEN HALTERUNG
SUPPORT FOR BEAM OVERLENGTHS IN AN ELECTRICAL AND/OR OPTICAL HARNESS, VEHICLE COMPRISING SUCH A SUPPORT AND METHOD FOR INSTALLING BEAMS IMPLEMENTING SUCH A SUPPORT

(30) Priorité: 10.07.2018 FR 1856339
(43) Date de publication de la demande: 15.01.2020
(73) Titulaire: Airbus Atlantic, 17300 Rochefort (FR)
(72) Inventeur: PAY, Jonathan, 17140 LAGORD (FR); PAOLY, Antony, 17540 VERINES (FR)
(74) Mandataire: Santarelli

(56) Documents cités:
- WO-A1-2007/112477
- DE-A1- 102011 012 996
- JP-A- 2002 022 971
- JP-U- S58 120 155
- US-B1- 6 966 791

## Description

### DOMAINE DE L'INVENTION

L'invention appartient au domaine des installations des câbles électriques ou optiques.

Plus particulièrement l'invention est adaptée au maintien des câbles électriques ou optiques des harnais dans les véhicules, notamment les aéronefs.

Plus particulièrement l'invention apporte une solution au problème de la gestion des sur-longueurs des câbles et de leurs dispersions, et concerne un support de sur-longueurs de faisceaux de câbles électriques et ou optiques ainsi qu'un procédé d'installation d'un faisceau de câbles électriques et ou optiques mettant en œuvre un tel support.

### ETAT DE LA TECHNIQUE

Il est bien connu dans les installations de faibles ou moyennes puissances comportant des fils électriques pour le transport de puissance électrique ou pour le transport de signaux, et aujourd'hui également dans les installations comportant des fibres optiques, de réaliser des harnais regroupant les fils en faisceaux reliant différents points de l'installation et de fixer ces faisceaux aux structures du bâtiment ou du véhicule à laquelle est destinée l'installation.

Il existe différents dispositifs de stockage de câble. Par exemple, le document US6966791B1 décrit un dispositif comportant une partie supérieure ou couvercle, une partie inférieure ou corps et deux ouvertures latérales positionnées aux extrémités d'une fermeture, le corps comprenant un insert qui peut avoir une pluralité de canaux circonférentiels et un compartiment central facultatif formé dans ledit insert, au moins un des canaux circonférentiels contenant une bobine sur laquelle un ou plusieurs câbles peuvent être enroulés. Le document JP2002022971A décrit quant à lui un corps rotatif d'enroulement de câble optique logé et agencé dans un boîtier de fixation de logement de partie de longueur excessive de câble optique comportant des parties d'entrée/sortie de câble optique dans la partie de paroi périphérique. Le document WO2007/112477A1 décrit dispositif de stockage de câble comprenant un arrangement extérieur définissant une périphérie extérieure et un arrangement intérieur définissant une périphérie intérieure, l'arrangement intérieur définissant une structure intérieure autour de laquelle au moins un câble électrique peut être enroulé de telle sorte qu'il est maintenu entre les périphéries intérieure et extérieure.

Enfin, le document DE102011012996A1 divulgue un support pour câble comprenant des échancrures axiales séparées angulairement de sorte à former une alternance de secteurs fermés et de secteurs ouverts de ladite paroi externe, lesdites échancrures présentant une hauteur suivant une direction axiale dudit support sensiblement égale à une hauteur de ladite paroi externe.

Toutefois, ces dispositifs de l'art antérieur ne sont pas adaptés à éviter l'usure du câble dans un environnement vibratoire.

Le cas des véhicules se distingue en raison d'un environnement vibratoire et d'autres sources de stress qui sollicitent les câbles des faisceaux.

Ainsi pour éviter les déplacements des câbles et des frottements entre câbles d'un harnais ou contre des structures il est généralement agencé en nombre adapté des supports auxquels les câbles isolément ou préassemblés en harnais sont fermement fixés.

Dans le domaine aéronautique en particulier, en raison d'un environnement vibratoire sévère et des risques que pourraient générer des endommagements de câbles, des règles strictes sont appliquées dans la fixation des câbles.

Il est en particulier préconisé dans les règles de l'art de ne pas dépasser une longueur de câble maximale entre deux supports pour garantir la stabilité mécanique et la durée de vie du câble.

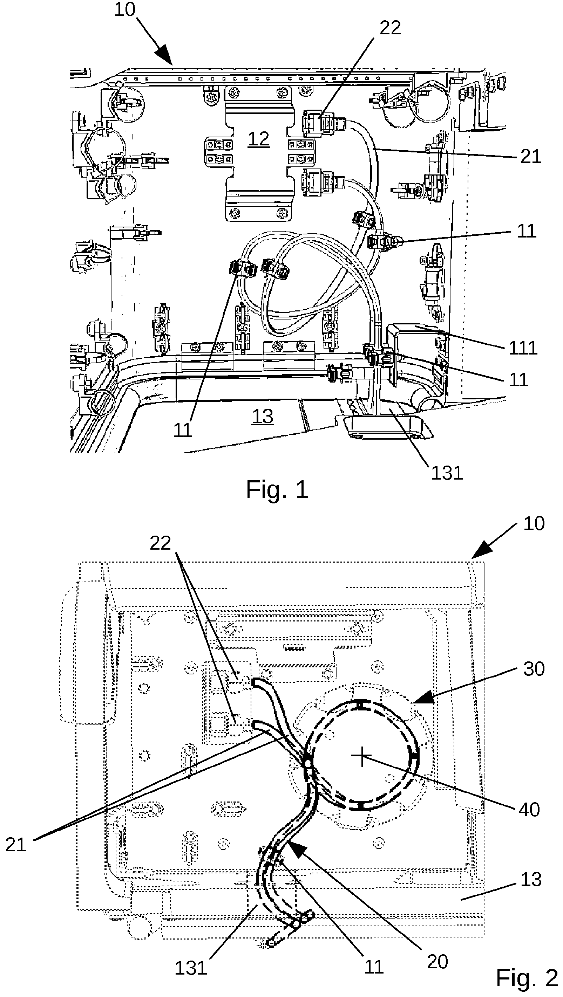

La figure 1 représente un agencement typique d'une zone dans laquelle se trouve une partie terminale d'un harnais 20, comportant ici deux faisceaux 21.

Chaque faisceau 21 se termine par un connecteur 22 dans lequel chaque câble, non individualisé dans la représentation des faisceaux sur les dessins, du faisceau est raccordé à un contact, non visible sur le dessin, du connecteur destiné à être raccordé à un équipement, non représenté, devant être fixé dans cet exemple sur la platine 12.

Comme il est visible sur la figure, chaque faisceau est fixé à la structure 10 par l'intermédiaire de colliers 11 fixés directement sur ladite structure ou maintenus par des supports de collier 111.

Dans cet exemple d'installation conventionnelle, la structure 10 est une structure secondaire, par exemple une structure d'un siège de passager, venant se fixer sur une structure principale, par exemple la structure d'un plancher 13 de fuselage d'un aéronef, et les faisceaux devant être connectés à l'équipement remontant par une traversée 131 du plancher.

Pour permettre le raccordement des faisceaux 21 il est bien entendu disponible une longueur suffisante des faisceaux entre la traversée 13 et les connecteurs 22.

On notera sur la figure 1 que cette longueur permet à chaque faisceau de décrire une boucle. Cette boucle correspond à une sur-longueur qui permet de faciliter l'installation du faisceau pour lequel il n'est pas admissible que les conducteurs mettent le connecteur en traction lorsqu'il est connecté sur l'équipement, et cette boucle permet de fixer la sur-longueur du faisceau en faisant décrire au faisceau 21 une trajectoire suivant ladite boucle.

Un inconvénient de ce type de montage est inhérent à la dispersion des sur-longueurs dans un harnais complexe, comme c'est le cas dans les aéronefs.

En effet, pour des raisons d'optimisation des procédés de production, les harnais sont généralement réalisés séparément sur des établis ou des bâtis à partir des données théoriques des longueurs de chacun des câbles, et les harnais ainsi réalisés, avec les connecteurs raccordés aux câbles et testés, sont placés dans la cellule de l'aéronef et fixés à la structure de cette cellule en suivant des cheminements prédéfinis.

Cette intégration des harnais dans la cellule ne permet pas, malgré l'utilisation de repères placés sur le harnais, de garantir une reproductibilité absolue de la position du harnais et il est aussi prévu de décrire une boucle plus ou moins ample suivant que la sur-longueur est plus ou moins grande du fait des dispersions de fabrication et de montage du harnais.

Dans certains cas, lorsque les tolérances s'empilent défavorablement, la sur-longueur au niveau de la traversée 13 est telle que les colliers prévus sur la structure 10 ne permettent plus de respecter la contrainte de longueur maximale de faisceau entre deux colliers. Il est alors nécessaire de modifier l'installation en ajoutant un support de collier et un collier pour respecter la règle de montage.

Une telle solution, qui s'avère acceptable à un stade où il n'est pas envisagé de retoucher le montage du harnais sur l'aéronef, reste pénalisante sur le plan industriel.

### PRÉSENTATION DE L'INVENTION

La présente invention apporte une solution au problème de la gestion des sur-longueurs au moyen d'un support adapté au maintien d'une longueur d'un ou plusieurs faisceaux pouvant être différentes d'une installation à une autre.

Pour cela la présente invention a pour objet un support de sur-longueurs de faisceaux de câbles électriques et ou optiques tel que défini dans les revendications. Ce support comporte une paroi arrière par laquelle le support est fixé à une structure lorsqu'il est mis en œuvre.

Le support de l'invention selon la revendication 1 comporte en outre une cavité quasi-torique, centrée sur un axe du support perpendiculaire à un plan moyen de la paroi arrière, et la cavité quasi-torique est délimitée par :
- tout ou partie de la paroi arrière ;
- une paroi interne délimitant latéralement la cavité quasi-torique du côté de l'axe du support et déterminant un petit diamètre D1 de la cavité quasi-torique ;
- une paroi externe délimitant latéralement la cavité quasi-torique du côté opposé à l'axe du support et déterminant un grand diamètre D2, supérieur au petit diamètre D1, de la cavité quasi-torique ; la paroi externe comportant au moins une échancrure axiale ;
- un couvercle, situé en vis-à-vis de la paroi arrière du côté avant du support ;

Le couvercle est fixé de manière amovible de sorte que :
- la cavité quasi-torique est ouverte, du côté avant du support, sur toute une longueur de la cavité quasi-torique lorsque le couvercle est retiré et forme une gorge refermée sur elle-même ;
- la cavité quasi-torique est fermée, à l'exception de l'au moins une échancrure axiale, lorsque le couvercle est fixé.

Il est ainsi obtenu un support pouvant maintenir des sur-longueurs de faisceaux supérieures à celles qui sont admises entre deux supports conventionnels et ceci pour une plage de sur-longueurs déterminée sans nécessiter d'adaptation des supports en nombre ni en emplacement sur la structure.

En outre, le support de l'invention comporte tout ou partie des caractéristiques suivantes pour autant qu'elles soient techniquement opérables en combinaison :
- La paroi externe comporte entre deux et six échancrures axiales réparties suivant un périmètre de la paroi externe ;
- Le couvercle comporte une ou plusieurs échancrures radiales agencées en vis à vis de la ou des échancrures axiales pour former des ouvertures étendues de la cavité quasi-torique ;
- Une section radiale de la cavité quasi-torique est sensiblement rectangulaire ou carrée ;
- Une embase comporte, assemblées entre elles, la paroi arrière, la paroi interne et la paroi externe ;
- L'embase est formée de manière intégrale, réalisée par un des procédés de moulage, de formage, d'usinage, de fabrication additive ;
- Des moyens de fixation du couvercle maintiennent le couvercle attaché à l'embase lorsque le couvercle est retiré ;
- Le petit diamètre D1 de la cavité quasi-torique est déterminé en fonction d'une longueur minimale d'une sur-longueur d'un faisceau à maintenir au moyen du support ;
- Une différence entre le petit diamètre D1 et le grand diamètre D2 de la cavité quasi-torique est déterminé en fonction d'un écart DSL entre une longueur minimale Lmin et une longueur maximale Lmax d'une sur-longueur d'un faisceau à maintenir au moyen du support .

L'invention concerne également un véhicule, comportant une installation électrique et ou optique, et comportant au moins un support de l'invention dans lequel support au moins un faisceau de câbles électriques et ou optiques parcours tout ou partie de la cavité quasi-torique.

Dans une forme de réalisation du véhicule, l'au moins un faisceau entre dans la cavité quasi-torique par une première ouverture de la paroi externe suivant une direction sensiblement tangente à la paroi externe, parcours sensiblement une fois la cavité quasi-torique et ressort par cette première ouverture ou par une autre ouverture voisine de cette première ouverture suivant une direction sensiblement tangente à la paroi externe.

L'invention concerne également un procédé d'installation d'un faisceau de câbles électriques et ou optiques mettant en œuvre au moins un support de l'invention et comportant les étapes de :
- si le couvercle est fixé, retirer ledit couvercle pour ouvrir la cavité quasi-torique ;
- engager par le côté avant du support le faisceau dans une première échancrure axiale de la paroi externe ;
- former avec le faisceau une boucle parcourant la cavité torique sur sensiblement un tour et sortir le faisceau par la première échancrure axiale ou par une échancrure axiale voisine de cette première échancrure axiale ;
- au besoin ajuster la position de la boucle formée par le faisceau entre la paroi interne et la paroi externe pour absorber la sur-longueur du faisceau ;
- fixer le couvercle pour refermer la cavité quasi-torique dans laquelle est maintenue la sur-longueur du faisceau.

### PRÉSENTATION DES FIGURES

L'invention est décrite en référence aux figures, données au titre d'un exemple non limitatif d'un mode de réalisation de l'invention, qui représente de manière schématique :
Figure 1 : déjà citée, un exemple d'installation terminale d'un harnais suivant l'art antérieur comportant des colliers pour maintenir des faisceaux fixés à une structure ;
Figure 2 : une vue schématique d'un exemple d'installation terminale d'un harnais, dans des conditions similaires à celles de la figure 1, et illustrant la trajectoire suivie par les sur-longueurs des faisceaux maintenues par un support de l'invention ;
Figure 3 : une vue isométrique illustrant le principe du support de l'invention assurant le maintien d'un harnais ;
Figure 4 : une vue isométrique d'un exemple de réalisation du support de l'invention représenté dans une position fonctionnelle fixé sur une platine, l'agencement intérieur du support et les câbles étant visible à travers le couvercle du support représenté partiellement transparent ;
Figures 5a, 5b, 5c : le support de l'invention suivant le mode de réalisation de la figure 4, représenté le couvercle et l'embase assemblés : en vue isométrique depuis le dessus, figure 5a, en vue isométrique depuis l'arrière, figure 5b, et en vue partielle de profil, figure 5c ;
Figure 6 : le support des figures 4, 5a, 5b et 5c suivant la vue isométrique de la figure 5a mais éclatée, le couvercle étant représenté séparé de l'embase;
Figure 7 : une forme de réalisation d'un support représenté
   isométrique de dessus présentant une variante du dispositif de maintien du couvercle sur l'embase.

Sur les différentes figures, les dessins ne sont pas nécessairement représentés avec une même échelle.

### DESCRIPTION DÉTAILLÉ D'UN MODE DE REALISATION

La figure 2 illustre un exemple de mise en œuvre d'un support 30, dans des conditions d'environnement similaire au cas illustré de l'art antérieur sur la figure 1.

Dans la description détaillée, le support est réalisé, au moins dans les modes de réalisation illustrés, avec des parois minces en regard des autres dimensions du support. Par simplification et pour alléger la description, les différentes parois seront le cas échéant confondues avec les surfaces qu'elles définissent et les effets conséquents à des épaisseurs physiques des parois sont négligés, l'homme du métier ayant les connaissances générales pour prendre en considération, si besoin, les épaisseurs réelles.

Le support 30 est fixé à une structure 10 par rapport à laquelle un ou des faisceaux 21 de câbles, en particulier de câbles électriques et ou optiques, doivent être fixés.

Il doit être compris ici qu'il s'agit de faisceaux suffisamment souples ou peu rigides pour être cintrés à la main par un opérateur de montage pour en ajuster la position ou le cheminement avant de les raccorder à un équipement ou autre platine de jonction. On retrouve typiquement ce type de conditions dans les installations électriques ou optique des aéronefs.

Le support 30 est en outre fixé pour intercepter une trajectoire suivie par les faisceaux 21 entre une traversée 131 de structure et l'emplacement de connecteurs, par exemple d'un équipement non représenté, auxquels doivent se raccorder des connecteurs 22 desdits faisceaux.

Comme il est représenté schématiquement sur la figure 2, le support 30, dont la forme et autres caractéristiques sont détaillées ultérieurement, présente en vue de dessus une forme d'ensemble circulaire, et les faisceaux suivent un parcours également sensiblement circulaire dans ledit support.

Pour des raisons pratiques, il sera considéré arbitrairement un côté arrière du support 30 comme étant le côté situé contre la structure 10 lorsque ledit support est fixé à ladite structure, et un côté avant du support comme étant le côté opposé au côté avant, c'est-à-dire le côté visible lorsque le support est fixé à la structure.

Les expressions « vers l'arrière » et « vers l'avant » seront donc interprétées suivant cette définition des côtés arrière et avant respectivement.

Les expressions « vers l'intérieur » et « vers l'extérieur » auront, sauf évidence contraire, vis-à-vis du support le sens commun correspondant à un rapprochement, réciproquement d'un éloignement, d'un axe 40 du support traversant ledit support depuis la face arrière vers la face avant.

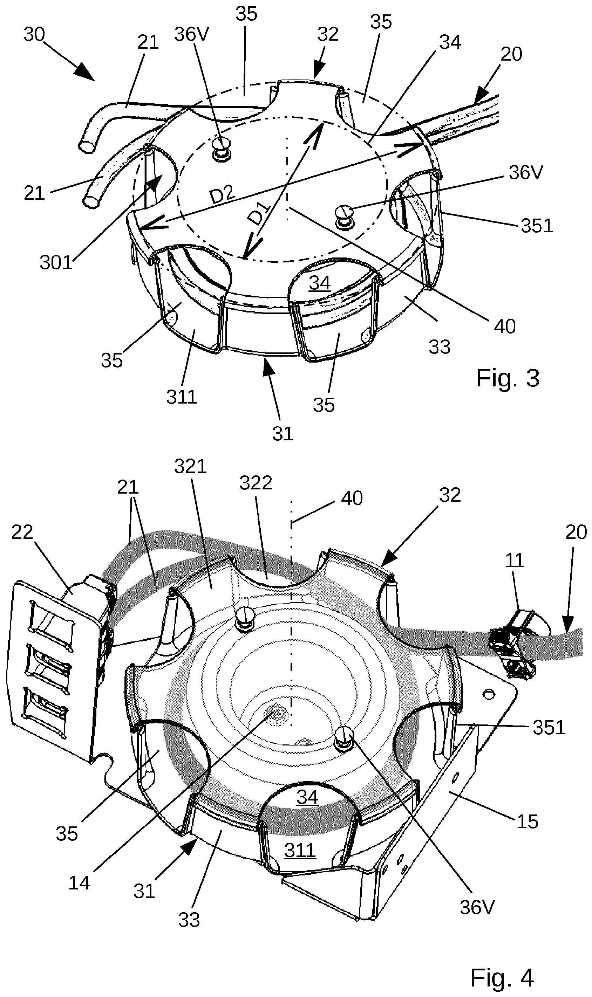

La figure 3 représente schématiquement un support 30 traversé par deux faisceaux 21. Cet exemple de deux faisceaux n'est pas limitatif, un nombre quelconque de faisceaux pouvant être maintenu dans le support pour autant qu'une section totale des faisceaux soit compatible avec les dimensions du support mis en œuvre.

Le support 30 comporte une embase 31 et un couvercle 32.

L'embase 31 et le couvercle 32 assemblés, comme représenté sur la figure 3, déterminent une cavité quasi-torique 301 sensiblement circulaire centrée sur l'axe 40.

La notion de cavité torique ou quasi-torique est ici à considérer dans une acception généralement admise d'un tube refermé sur lui-même dont une section dans un plan axial du tore n'est pas nécessaire un cercle et dont le centre de ladite section ne décrit pas nécessairement un cercle au sens mathématique du terme. En particulier la section du tube peut être carrée, rectangulaire, trapézoïdale. Avantageusement le centre de la section décrit un cercle mais peut avoir une forme différente sans modifier les principes de l'invention.

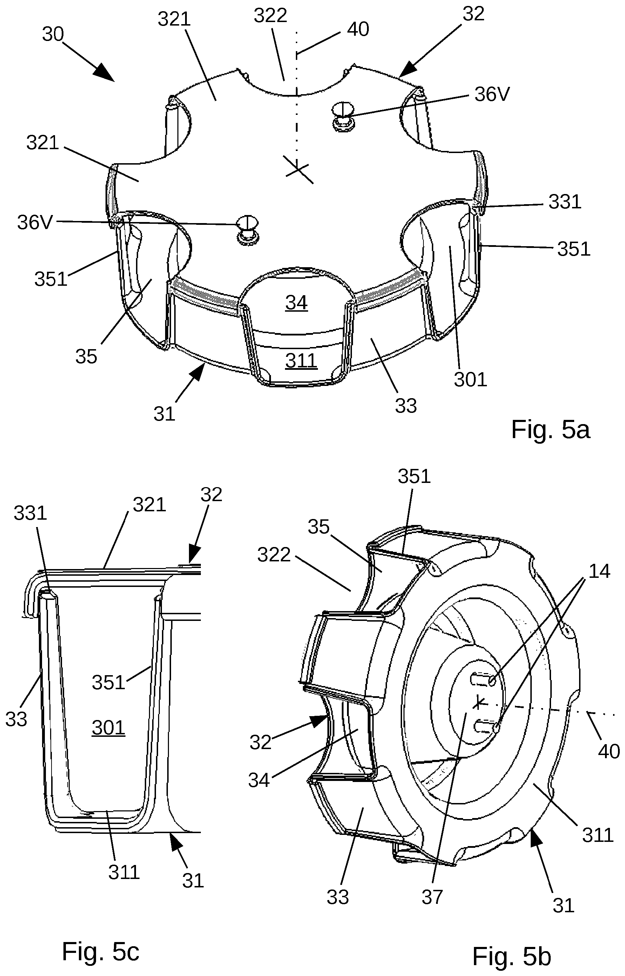

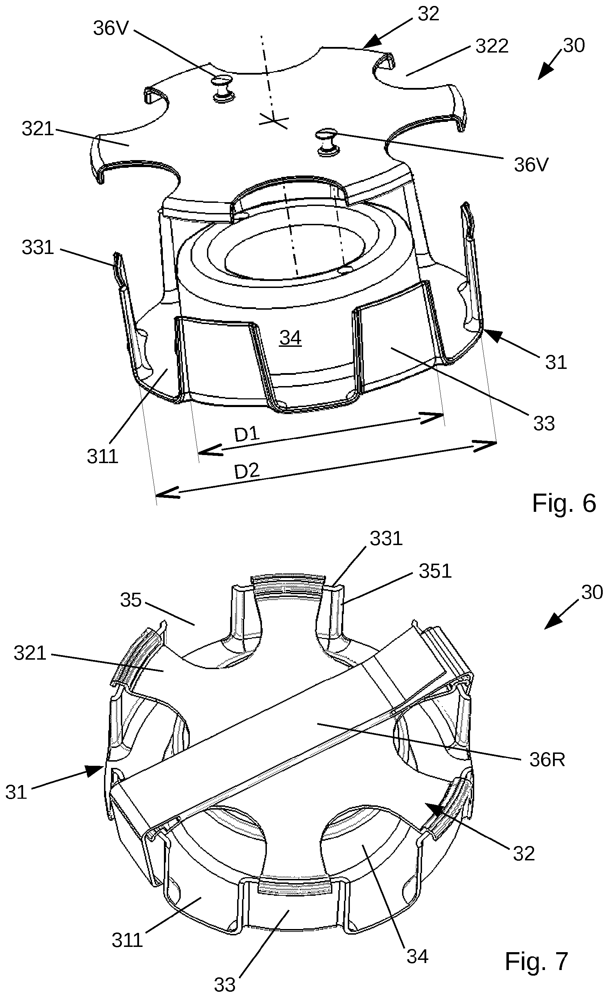

On se réfère maintenant aux figures 5a à 5c et figure 6 d'une forme de réalisation du support.

L'embase 31 comporte une paroi arrière 311 par laquelle le support est en appui sur la structure 10 ou sur une structure intermédiaire 15 elle même fixée à ladite structure.

L'embase 31 est, en vue de dessus, sensiblement circulaire dont un centre correspond à l'axe 40 et comporte une paroi externe 33 et une paroi interne 34 se projetant depuis la paroi arrière 311 vers l'avant du support.

Avantageusement les parois interne et externe sont sensiblement perpendiculaires à la paroi arrière comme dans les exemples illustrés.

Le couvercle 32, également sensiblement circulaire en vue de dessus, recouvre l'embase 31 du côté avant du support 30, sur laquelle embase ledit couvercle vient en appui sur un bord avant de la paroi externe 33 et ou sur un bord avant de la paroi interne 34.

Avantageusement, un bord périphérique du couvercle est conformé, par exemple avec un bord tombé, pour que ledit couvercle s'emboîte avec un bord libre 331 de la paroi externe 33 de sorte à garantir une position recherchée stable dudit couvercle sur l'embase.

Dans une forme de réalisation non illustrée, le bord périphérique du couvercle est conformé pour s'encliqueter avec le bord libre de la paroi externe 33 de l'embase, en profitant d'une élasticité des matériaux mis en œuvre, afin d'assurer un maintien du couvercle sur l'embase.

Avantageusement, des vis 36V assurent le maintien du couvercle sur l'embase pour éviter que le couvercle se sépare en utilisation sous l'effet de vibrations.

Lorsque l'embase 31 et le couvercle 32 sont assemblés ils délimitent la cavité quasi-torique 301 qui est radialement limitée par la paroi externe 33 et la paroi interne 34 qui sont sensiblement cylindriques de génératrices sensiblement parallèles à l'axe 40 du support 30.

Dans la forme de réalisation représentée, la paroi interne est cylindrique de section circulaire et détermine un diamètre intérieur D1 de la cavité quasi-torique 301 et la paroi externe est cylindrique de section circulaire, de même axe que le cylindre correspondant à la paroi interne, et détermine un diamètre extérieur D2 de ladite cavité quasi-torique, D2 étant nécessairement strictement supérieur à D1.

Par construction, la paroi interne 34 détermine donc un plus petit périmètre (π x D1) de la cavité quasi-torique et la paroi externe 33 détermine un plus grand périmètre (π x D2) de ladite cavité quasi-torique.

La paroi externe 33 comporte également des échancrures axiales 35 formant, lorsque le couvercle est assemblé sur l'embase, des ouvertures par lesquelles la cavité quasi-torique 301 communique avec l'espace extérieur au support 30.

La paroi externe 33 présente une pluralité d'échancrures axiales réparties sur ladite paroi externe et séparée angulairement de sorte à former une alternance de secteurs fermés de la paroi externe et de secteurs ouverts lorsqu'il est parcouru le périmètre de ladite paroi externe.

Une hauteur de l'ouverture correspond sensiblement à une hauteur de la cavité quasi-torique 301 entre le couvercle 32 et la paroi arrière 311 de l'embase, ce qui en pratique correspond à des échancrures axiales 35 ouvertes sensiblement sur toute la hauteur de la paroi externe 33.

Une largeur des ouvertures doit permettre de passer les faisceaux 21 pour lesquels le support 30 sera utilisé et en pratique il pourra être réalisé des échancrures axiales 35 dont la largeur est sensiblement celle d'une largeur de la cavité quasi-torique 301 suivant une direction radiale entre la paroi interne 34 et la paroi externe 33. Il est ainsi obtenu des ouvertures ayant sensiblement les mêmes dimensions qu'une section dans un plan axial de la cavité quasi-torique (301), ce qui assure la possibilité de faire passer par ces échancrures le ou les faisceaux qui seront installés dans la cavité quasi-torique.

Dans la forme de réalisation illustrée sur les figures 5a à 5c et 6, le couvercle 32 comporte également des échancrures radiales 322 séparées par des bras radiaux 321, lesdites échancrures radiales étant agencées, lorsque le couvercle est assemblé sur l'embase, pour correspondre aux échancrures axiales 35 de la paroi externe 33. Il est ainsi formé des ouvertures de la cavité quasi-torique 301 de plus grandes dimensions qui permettent entre autre d'inspecter visuellement les faisceaux sans retirer le couvercle, voire de déplacer manuellement les faisceaux à l'intérieur de ladite cavité quasi-torique lors du montage du ou des faisceaux.

Avantageusement, la paroi arrière 311 de l'embase s'étend jusqu'à proximité de l'axe 40 du support 30 de sorte à former dans une partie centrale dudit support un plan d'appui 37 par lequel l'embase 31 est fixée à la structure 10 ou un support intermédiaire 15. Le plan d'appui peut être fixé par tout moyen adapté à l'environnement dans lequel il sera placé, par exemple par collage, par rivetage, par vissage avec des vis 14, cette liste n'étant pas exhaustive.

Avantageusement, les bords 351 des échancrures axiales 35, et de manière générale toutes les arrêtes sur lesquelles les faisceaux 21 sont susceptibles de frotter, sont réalisées avec des formes adoucies afin d'éviter de blesser les gaines de protection de ces faisceaux et des câbles qui les forment.

### Mise en œuvre du support

Les avantages de l'invention seront mieux compris à la description de la mise en œuvre du support 30.

Il est fait référence ici principalement à la figure 2, à la figure 3 et à la figure 4.

Considérant la figure 2, un ou des faisceaux 21 munis de connecteurs 22 d'un harnais 20 d'un véhicule, par exemple un avion, sont en attente d'être raccordés à un équipement comportant des connecteurs, non représenté, complémentaires des connecteurs 22 du harnais.

Le ou les faisceaux présentent à ce stade une longueur libre disponible, laquelle présente une sur-longueur SL par rapport à une longueur minimale strictement nécessaire au raccordement de l'équipement.

Lorsque l'équipement est mis en place dans le véhicule, ledit équipement comporte un support 30 de l'invention fixé à la structure 10 dudit équipement à un emplacement approprié sur un trajet prévu d'être suivi par le ou les faisceaux 21. Cet emplacement du support 30 sur la structure 10 est déterminé à la conception de ladite structure en fonction de l'environnement dans lequel sera montée la structure.

Dans une première étape, le couvercle 32 est retiré de l'embase 31 de sorte que la cavité quasi-torique 301 est ouverte sans paroi supérieure pour former une gorge, et de sorte que les échancrures axiales 35 sont également dégagées.

Dans une deuxième étape, chaque faisceau 21 est placé dans la gorge dans laquelle il parcourt sensiblement un tour formant une boucle en étant engagé par une des échancrures 35 et dégagé par la même échancrure ou par une échancrure voisine.

Dans l'exemple illustré sur la figure 4, chaque faisceau 21 parcourt un tour complet dans la gorge pour en être dégagé par l'échancrure suivante, dans le sens de rotation parcouru, de l'échancrure par laquelle il a été engagé.

Cette configuration, lorsque l'espacement entre les échancrures est adapté, permet au faisceau d'avoir sensiblement une même orientation dans l'espace entre son engagement et son dégagement du support 30, d'où l'intérêt de placer ledit support sur un trajet « naturel » du faisceau pour une installation conventionnelle entre deux colliers ou entre un dernier collier et le connecteur fixe.

Considérant une longueur de la boucle formée par le faisceau 21 dans la gorge, ladite longueur pourra être au minimum du périmètre de la paroi interne 34 et au maximum du périmètre de la paroi externe 33. Ainsi le support 30 est en mesure de maintenir dans la gorge, sur sensiblement un tour, une longueur comprise entre Lmin = π x D1 et Lmax = π x D2.

En ayant considéré lors de la conception du support 30 que Lmin est au plus égal, et de préférence sensiblement égal par valeur inférieure, à la condition de valeur minimale admise de la sur-longueur SL à maintenir pour définir le diamètre D1, le support 30 sera en mesure de maintenir une sur-longueur pouvant dépasser d'une valeur DSL = π x (D2 - D1) la valeur minimale de ladite sur-longueur.

On notera ici que le principe est exposé de manière simplifiée, mais que dans la pratique il peut être nécessaire de prendre en compte un diamètre moyen Df du faisceau pour adapter les calculs au cas d'espèce, la formule ci-dessus devenant alors DSL = π x (D2 - D1 - Df).

Lorsque la sur-longueur aura la valeur minimale admissible, le faisceau 21 longera au plus près la paroi interne 34, et lorsque la sur-longueur dépassera de la valeur DSL ladite sur-longueur minimale, le faisceau 21 longera au plus près la paroi externe 33. Les déformations nécessaires sont ici possibles en raison de la rigidité limitée du faisceau qui sera cintré sans difficulté par un opérateur réalisant le montage du faisceau.

Lorsque le ou les faisceaux auront ainsi été placés, le couvercle 32 est remis en place sur l'embase 31 puis sécurisé par les éléments de maintien de sorte que les faisceaux se trouvent maintenus dans la cavité quasi-torique 301, pour une plage de sur-longueurs possibles, sans qu'il soit nécessaire de modifier le nombre ou la position de colliers support.

Un agencement optimal du supports 30 permet par rapport à une installation conventionnel de remplacer au moins deux colliers et surtout évite de se trouver dans des conditions où il serait nécessaire d'ajouter un collier non prévu.

Dans un exemple de réalisation de l'installation d'un équipement sur un aéronef, il est souhaité d'absorber des dépassements DSL de la sur-longueur pouvant atteindre 15 centimètres, sans modifier l'agencement des supports.

Une telle capacité est obtenue avec un support 30 de l'invention dont le diamètre extérieur D2 est supérieur de seulement 5 centimètres, auxquels il convient d'ajouter le diamètre du faisceau à installer, au diamètre intérieur D1 (en prenant π = 3 et en négligeant le diamètre moyen du faisceau), soit une cavité quasi-torique de 2,5 centimètres de largeur, en négligeant le diamètre du faisceau.

La sur-longueur minimale est avantageusement prise en considération pour calculer le diamètre intérieur D1, avantageusement pour correspondre à une boucle du faisceau décrivant la cavité quasi-torique en longeant la paroi interne 34 sur un tour. Par exemple pour une sur-longueur minimale de 30 centimètres, il sera considéré un diamètre intérieur D1 de 10 centimètres (en prenant π = 3 et en négligeant le diamètre moyen du faisceau).

Bien que la forme circulaire de la gorge du support soit a priori optimale sur le plan mathématique, le support de l'invention, par exemple pour être adapté géométriquement à un environnement particulier, peut prendre des formes variées pour autant qu'il est préservé sa fonction de maintenir au moins un faisceau formant une boucle sur environ un tour dans une cavité quasi-torique, dans laquelle cette boucle est confinée, avec plusieurs longueurs possibles de la boucle du fait de la largeur de la cavité quasi-torique.

En particulier, le nombre d'échancrures 35 dans la paroi externe 33 peut être différent de celui représenté dans l'exemple de réalisation décrit.

Au moins deux échancrures plus ou moins distantes permettent qu'un faisceau entre par une des échancrures et ressorte par l'autre, comme dans le schéma de la figure 3, facilitant l'installation des faisceaux 21, voire d'utiliser des échancrures différentes en fonctions des faisceaux supportés.

Un nombre plus important d'échancrures, réparties sur périmètre de la paroi externe, par exemple 6 échancrures équiréparties comme dans les formes de réalisation illustrées sur les figures, apporte une souplesse d'installation du faisceau dans le support qui permet de réaliser des modèles de support pouvant être utilisés dans des conditions d'installation variées.

Il est également compris de la description de la mise en œuvre du support que les formes de l'embase, du couvercle et des moyens de maintien dudit couvercle sur l'embase ne sont pas critiques et peuvent être différentes des formes de réalisation illustrées sans nuire au résultat recherché.

Dans la forme de réalisation illustrée sur la figure 7, le couvercle 32 est maintenu sur l'embase 31 par un ruban 36R auto accrochant fixé à l'embase et qui sangle le couvercle pour le maintenir en position sur l'embase en lieu et place ou en complément des vis 36V. Dans une forme de réalisation, le couvercle est en outre fixé à une extrémité du ruban 36R de sorte que le couvercle est imperdable en restant, même dégagé de l'embase, attaché à ladite embase par le ruban.

En pratique, tout dispositif de fixation assurant l'assemblage du couvercle sur l'embase, dans les conditions d'utilisation prévues du support 30, peut être utilisé, les vis 36V et la sangle 36R représentées illustrant des exemples de dispositifs et d'arrangement pour fixer le couvercle.

Le couvercle du support est pourvu d'éléments de compression, solution non représentée, qui viennent appuyer, lorsque le couvercle est fixé sur l'embase, sur les faisceaux dans la cavité quasi-torique pour éviter une usure des protections des câbles en environnement vibratoire.

Avantageusement ces éléments de compression sont souples pour s'adapter à différentes sections et différents nombres de faisceaux. Par exemple ces éléments de compression consistent en des blocs d'une mousse alvéolaire souple, collés sur une face du couvercle tournée vers l'intérieure de la cavité quasi-torique, qui seront en mesure de se déformer avec une amplitude suffisante pour appuyer sur les faisceaux.

Le support peut être réalisé en tout matériau adapté à l'environnement dans lequel il doit être utilisé.

Il peut être réalisé exclusivement dans un matériau métallique, mais, sauf environnement exigeant, il sera de préférence réalisé en mettant en œuvre une résine polymère, chargée ou non de fibres.

Les techniques connues d'usinage, de formage, de moulage ou de fabrication additive sont utilisables pour la fabrication des parties du support.

Avantageusement l'embase est réalisée en une seule pièce.

Ses dimensions sont aisément adaptables en fonction des cas d'espèces.

Suivant le principe de mise en œuvre, chaque faisceau forme une boucle sur un tour en ceinturant la paroi interne, mais le parcours d'un faisceau dans la cavité quasi-torique peut être raccourci en ressortant par une ouverture précédente de la paroi externe, avant d'avoir décrit une boucle complète, sous réserve d'une adaptation de la sur-longueur, de sorte que le faisceau présente une direction de sortie différente de la direction d'entrée. A contrario, le parcours d'un faisceau dans la cavité quasi-torique peut être allongé en ressortant par une ouverture suivante de la paroi externe, après avoir décrit plus qu'une boucle complète.

Avantageusement un faisceau cheminera dans la cavité quasi-torique du support sur un parcours compris entre 0,5 tour et 1,5 tour pour s'adapter à un grand nombre de configurations d'installation lors de la mise en oeuvre du support de l'invention.

## Revendications

1. Support (30) de sur-longueurs de faisceaux (21) de câbles électriques et ou optiques, comportant une paroi arrière (31), par laquelle ledit support peut être fixé à une structure (10, 15) lorsqu'il est mis en œuvre, comportant une cavité quasi-torique (301), centrée sur un axe (40) du support perpendiculaire à un plan moyen de la paroi arrière (31), ladite cavité quasi-torique étant délimitée par :
- tout ou partie de la paroi arrière (31) ;
- une paroi interne (34) délimitant latéralement la cavité quasi-torique (301) et déterminant un petit diamètre D1 de ladite cavité quasi-torique ;
- une paroi externe (33) délimitant latéralement la cavité quasi-torique (301) et déterminant un grand diamètre D2, supérieur au petit diamètre D1, de ladite cavité quasi-torique , la paroi externe (33) comportant une pluralité d'échancrures axiales (35) séparées angulairement de sorte à former une alternance de secteurs fermés et de secteurs ouverts de ladite paroi externe, lesdites échancrures présentant une hauteur suivant une direction axiale dudit support sensiblement égale à une hauteur de ladite paroi externe;
- un couvercle (32), situé en vis-à-vis de la paroi arrière du côté avant du support (30) ;
le couvercle (32) étant fixé de manière amovible de sorte que :
- la cavité quasi-torique (301) est ouverte, du côté avant du support (30), sur toute une longueur de ladite cavité quasi-torique lorsque le couvercle (32) est retiré et forme une gorge circonférentielle ;
- la cavité quasi-torique (301) est fermée, à l'exception des échancrures axiales (35), lorsque le couvercle (32) est fixé ;
la paroi externe (33) comportant une pluralité d'échancrures axiales (35) séparées angulairement de sorte à former une alternance de secteurs fermés et de secteurs ouverts de ladite paroi externe, lesdites échancrures présentant une hauteur suivant une direction axiale dudit support sensiblement égale à une hauteur de ladite paroi externe ;
**caractérisé en ce que**
lesdites échancrures présentent une largeur suivant un périmètre de la paroi externe (33) sensiblement égale à une largeur radiale de la cavité torique, sensiblement égale à la différence entre le grand diamètre D2 et le petit diamètre D1 de la cavité quasi-torique, et
le couvercle (32) comporte un ou des éléments de compression déformables, agencés pour exercer une pression sur le ou les faisceaux (21) insérés dans la cavité quasi-torique (301) lorsque ledit couvercle est fixé.

2. -Support selon la revendication 1, dans lequel la paroi externe (33) comporte entre deux et six échancrures axiales (35) réparties suivant un périmètre de ladite paroi externe.

3. -Support selon l'une des revendications précédentes, dans lequel le couvercle comporte une ou plusieurs échancrures radiales (322) agencées en vis-à-vis des échancrures axiales (35) pour former des ouvertures étendues de la cavité quasi-torique (301).

4. -Support selon l'une des revendications précédentes, dans lequel une section radiale de la cavité quasi-torique (301) est sensiblement rectangulaire ou carrée.

5. -Support selon l'une des revendications précédentes, dans lequel une embase (31) comporte, assemblées entre elles, la paroi arrière (311), la paroi interne (34) et la paroi externe (33).

6. Support selon la revendication 5, dans lequel l'embase (31) est formée de manière intégrale, réalisée par un des procédés de moulage, de formage, d'usinage, de fabrication additive.

7. Support selon la revendication 5 ou la revendication 6, dans lequel des moyens de fixation du couvercle (32) maintiennent ledit couvercle attaché à l'embase (31) lorsque le couvercle est retiré.

8. -Support selon l'une des revendications précédentes, dans lequel le petit diamètre D1 de la cavité quasi-torique (301) dépend d'une longueur minimale d'une sur-longueur d'un faisceau (21) à maintenir au moyen dudit support.

9. Support selon l'une des revendications précédentes, dans lequel une différence entre le petit diamètre D1 et le grand diamètre D2 de la cavité quasi-torique (301) dépend d'un écart DSL entre une longueur minimale Lmin et une longueur maximale Lmax d'une sur-longueur d'un faisceau (21) à maintenir au moyen dudit support.

10. Véhicule, comportant une installation électrique et ou optique, et comportant au moins un support (30) selon l'une des revendications précédentes, dans lequel support, au moins un faisceau (21) de câbles électriques et ou optiques parcourt tout ou partie de la cavité quasi-torique (301).

11. Véhicule selon la revendication 10, dans lequel l'au moins un faisceau (21) entre dans la cavité quasi-torique par une première ouverture de la paroi externe (33) suivant une direction sensiblement tangente à ladite paroi externe, parcourt sensiblement une fois la cavité quasi-torique (301) et ressort par ladite première ouverture ou par une autre ouverture voisine de ladite première ouverture suivant une direction sensiblement tangente à la paroi externe (33).

12. Procédé d'installation d'un faisceau (21) de câbles électriques et ou optiques mettant en œuvre au moins un support (30) conforme à l'une des revendications 1 à 9, comportant les étapes suivantes :
- si le couvercle (32) est fixé, retirer ledit couvercle pour ouvrir la cavité quasi-torique ;
- engager par le côté avant du support (30) le faisceau (21) dans une première échancrure axiale (35) de la paroi externe (33) ;
- former avec le faisceau (21) une boucle parcourant la cavité torique (301) sur sensiblement un tour et sortir ledit faisceau par la première échancrure axiale ou par une échancrure axiale voisine de ladite première échancrure axiale ;
- au besoin, ajuster la position de la boucle formée par le faisceau (21) entre la paroi interne (34) et la paroi externe (33) pour absorber la sur-longueur du faisceau (21) ;
- fixer le couvercle (32) pour refermer la cavité quasi-torique (301) dans laquelle est maintenue la sur-longueur du faisceau.

## Patentansprüche

1. - Träger (30) von Überlängen von Bündeln (21) von elektrischen und/oder optischen Kabeln, der eine Rückwand (31) aufweist, durch die der Träger bei der Ausführung an einer Struktur (10, 15) befestigt werden kann, die einen quasi-torischen Hohlraum (301) aufweist, der auf einer Achse (40) des Trägers senkrecht zu einer Mittelebene der Rückwand (31) zentriert ist, wobei der quasi-torische Hohlraum begrenzt ist durch:
- den gesamten oder einen Teil der Rückwand (31);
- eine Innenwand (34), die den quasi-torischen Hohlraum (301) seitlich begrenzt und einen kleinen Durchmesser D1 des quasi-torischen Hohlraums bestimmt;
- eine Außenwand (33), die den quasi-torischen Hohlraum (301) seitlich begrenzt und einen großen Durchmesser D2 des quasi-torischen Hohlraums bestimmt, der größer als der kleine Durchmesser D1 ist, wobei die Außenwand (33) eine Vielzahl von axialen Aussparungen (35) aufweist, die winkelweise getrennt sind, so dass sie einen Wechsel von geschlossenen Ausschnitten und offenen Ausschnitten der Außenwand bilden, wobei die Aussparungen eine Höhe entlang einer axialen Richtung des Trägers aufweisen, die im Wesentlichen einer Höhe der Außenwand entspricht;
- einen Deckel (32), der sich gegenüber der Rückwand auf der Vorderseite des Trägers (30) befindet;
wobei der Deckel (32) abnehmbar befestigt ist, so dass:
- der quasi-torische Hohlraum (301) auf der Vorderseite des Trägers (30) über eine ganze Länge des quasi-torischen Hohlraums geöffnet ist, wenn der Deckel (32) entfernt wird und eine umlaufende Nut bildet;
- der quasi-torische Hohlraum (301), mit Ausnahme der axialen Aussparungen (35), geschlossen ist, wenn der Deckel (32) befestigt ist;
die Außenwand (33) eine Vielzahl von axialen Aussparungen (35) aufweist, die winkelweise getrennt sind, so dass sie einen Wechsel von geschlossenen Ausschnitten und offenen Ausschnitten der Außenwand bilden, wobei die Aussparungen eine Höhe in einer axialen Richtung des Trägers aufweisen, die im Wesentlichen der Höhe der Außenwand entspricht;
**dadurch gekennzeichnet, dass** die Aussparungen eine Breite aufweisen, die einem Umfang der Außenwand (33) entspricht, der im Wesentlichen einer radialen Breite des torischen Hohlraums entspricht, die im Wesentlichen dem Unterschied zwischen dem großen Durchmesser D2 und dem kleinen Durchmesser D1 des quasi-torischen Hohlraums entspricht, und der Deckel (32) ein oder mehrere verformbare Druckelemente aufweist, die so angeordnet sind, dass sie Druck auf das oder die in den quasi-torischen Hohlraum (301) eingeführten Bündel (21) ausüben, wenn der Deckel befestigt ist.

2. - Träger nach Anspruch 1, wobei die Außenwand (33) zwischen zwei und sechs axiale Aussparungen (35) aufweist, die entlang eines Umfangs der Außenwand verteilt sind.

3. - Träger nach einem der vorhergehenden Ansprüche, wobei der Deckel eine oder mehrere radiale Aussparungen (322) aufweist, die gegenüber den axialen Aussparungen (35) angeordnet sind, um erweiterte Öffnungen des quasi-torischen Hohlraums (301) zu bilden.

4. - Träger nach einem der vorhergehenden Ansprüche, wobei ein radialer Querschnitt des quasi-torischen Hohlraums (301) im Wesentlichen rechteckig oder quadratisch ist.

5. - Träger nach einem der vorhergehenden Ansprüche, wobei ein Sockel (31) die Rückwand (311), die Innenwand (34) und die Außenwand (33) aufweist, die miteinander verbunden sind.

6. - Träger nach Anspruch 5, wobei der Sockel (31) einstückig ausgebildet ist und durch eines der Verfahren des Gießens, Umformens, Bearbeitens oder der additiven Fertigung hergestellt wird.

7. - Träger nach Anspruch 5 oder Anspruch 6, wobei Befestigungsmittel des Deckels (32) den Deckel am Sockel (31) festhalten, wenn der Deckel abgenommen wird.

8. - Träger nach einem der vorhergehenden Ansprüche, wobei der kleine Durchmesser D1 des quasi-torischen Hohlraums (301) von einer Mindestlänge einer Überlänge eines mittels des Trägers zu haltenden Bündels (21) abhängt.

9. - Träger nach einem der vorhergehenden Ansprüche, wobei ein Unterschied zwischen dem kleinen Durchmesser D1 und dem großen Durchmesser D2 des quasi-torischen Hohlraums (301) von einem Abstand DSL zwischen einer minimalen Länge Lmin und einer maximalen Länge Lmax einer Überlänge eines mittels des Trägers (21) zu haltenden Trägers abhängt.

10. - Fahrzeug, das eine elektrische und/oder optische Anlage aufweist und mindestens einen Träger (30) nach einem der vorhergehenden Ansprüche aufweist, wobei in dem Träger mindestens ein Bündel (21) elektrischer und/oder optischer Kabel in dem gesamten oder einem Teil des quasi-torischen Hohlraums (301) verläuft.

11. - Fahrzeug nach Anspruch 10, wobei das mindestens ein Bündel (21) durch eine erste Öffnung der Außenwand (33) entlang einer Richtung, die im Wesentlichen tangential zur Außenwand ist, in den quasi-torischen Hohlraum (301) eintritt, im Wesentlichen einmal durch den quasi-torischen Hohlraum verläuft und durch die erste Öffnung oder durch eine andere Öffnung in der Nähe der ersten Öffnung entlang einer Richtung, die im Wesentlichen tangential zur Außenwand (33) ist, austritt.

12. - Verfahren zur Installation eines Bündels (21) elektrischer und/oder optischer Kabel, bei dem mindestens ein Träger (30) gemäß einem der Ansprüche 1 bis 9 eingesetzt wird, das die folgenden Schritte aufweist:
- wenn der Deckel (32) befestigt ist, Entfernen des Deckels, um den quasi-torischen Hohlraum zu öffnen;
- Einführen des Bündels (21) von der Vorderseite des Trägers (30) in eine erste axiale Aussparung (35) der Außenwand (33);
- Bilden mit dem Bündel (21) einer Schlaufe, die im Wesentlichen eine Umdrehung durch den torischen Hohlraum (301) verläuft, und Herausführen des Bündels durch die erste axiale Aussparung oder durch eine axiale Aussparung, die der ersten axialen Aussparung benachbart ist;
- bei Bedarf, Anpassen der Position der vom Bündel (21) gebildeten Schleife zwischen der Innenwand (34) und der Außenwand (33), um die Überlänge des Bündels (21) aufzunehmen;
- Befestigen des Deckels (32), um den quasi-torischen Hohlraum (301) zu schließen, in dem die Überlänge des Bündels gehalten wird.

## Claims

1. - A support (30) for excess lengths of harnesses (21) of electrical and/or optical cables, comprising a rear wall (31), by which said support can be fastened to a structure (10, 15) when implemented, comprising a quasi-toric cavity (301), centered on an axis (40) of the support perpendicular to a mean plane of the rear wall (31), said quasi-toric cavity being delimited by:
- all or part of the rear wall (31);
- an inner wall (34) laterally delimiting the quasi-toric cavity (301) and determining a small diameter D1 of said quasi-toric cavity;
- an outer wall (33) laterally delimiting the quasi-toric cavity (301) and determining a large diameter D2, larger than the small diameter D1, of said quasi-toric cavity, the outer wall (33) comprising a plurality of axial notches (35) angularly separated so as to form an alternation of closed sectors and open sectors of said outer wall, said notches having a height along an axial direction of said support substantially equal to a height of said outer wall;
- a cover (32), located opposite the rear wall of the front side of the support (30);
the cover (32) being removably fastened so that:
- the quasi-toric cavity (301) is open, on the front side of the support (30), over an entire length of said quasi-toric cavity when the cover (32) is removed and forms a circumferential groove;
- the quasi-toric cavity (301) is closed, except for the axial notches (35), when the cover (32) is fastened;
the outer wall (33) comprising a plurality of axial notches (35) angularly separated so as to form an alternation of closed sectors and open sectors of said outer wall, said notches having a height along an axial direction of said support substantially equal to a height of said outer wall;
**characterized in that** said notches having a width along a perimeter of the outer wall (33) substantially equal to a radial width of the toric cavity, substantially equal to the difference between the large diameter D2 and the small diameter D1 of the quasi-toric cavity, and the cover (32) comprises one or more deformable compression element(s), arranged so as to exert a pressure on the harness(es) (21) inserted into the quasi-toric cavity (301) when said cover is fastened.

2. - The support according to claim 1, wherein the outer wall (33) comprises between two and six axial notches (35) distributed along a perimeter of said outer wall.

3. - The support according to one of the preceding claims, wherein the cover comprises one or more radial notch(es) (322) arranged opposite the axial notches (35) to form extended openings of the quasi-toric cavity (301).

4. - The support according to one of the preceding claims, wherein a radial section of the quasi-toric cavity (301) is substantially rectangular or square.

5. - The support according to one of the preceding claims, wherein a base (31) comprises the rear wall (311), the inner wall (34) and the outer wall (33) assembled together.

6. - The support according to claim 5, wherein the base (31) is integrally formed, made by one of the molding, forming, machining, additive manufacturing methods.

7. - The support according to claim 5 or claim 6, wherein means for attaching the cover (32) hold said cover fastened to the base (31) when the cover is removed.

8. - The support according to one of the preceding claims, wherein the small diameter D1 of the quasi-toric cavity (301) depends on a minimum length of an excess length of a harness (21) to be held by means of said support.

9. - The support according to one of the preceding claims, wherein a difference between the small diameter D1 and the large diameter D2 of the quasi-toric cavity (301) depends on a difference DSL between a minimum length Lmin and a maximum length Lmax of an excess length of a harness (21) to be held by means of said support.

10. - A vehicle, comprising an electrical and/or optical installation, and comprising at least one support (30) according to one of the preceding claims, in which support, at least one harness (21) of electrical and/or optical cables runs throughout all or part of the quasi-toric cavity (301).

11. - The vehicle according to claim 10, wherein the at least one harness (21) enters the quasi-toric cavity through a first opening of the outer wall (33) along a direction substantially tangent to said outer wall, runs substantially once through the quasi-toric cavity (301) and comes out through said first opening or through another opening adjacent to said first opening along a direction substantially tangent to the outer wall (33).

12. - A method for installing a harness (21) of electrical and/or optical cables implementing at least one support (30) according to one of claims 1 to 9, comprising the following steps of:
- if the cover (32) is fastened, removing said cover to open the quasi-toric cavity;
- engaging, through the front side of the support (30), the harness (21) in a first axial notch (35) of the outer wall (33);
- forming with the harness (21) a loop running through the toric cavity (301) over substantially one revolution and coming out of said harness through the first axial notch or through an axial notch adjacent to said first axial notch;
- if necessary, adjusting the position of the loop formed by the harness (21) between the inner wall (34) and the outer wall (33) to absorb the excess length of the harness (21);
- attaching the cover (32) to close the quasi-toroidal cavity (301) in which the excess length of the harness is held.
